# EUROPÄISCHE PATENTSCHRIFT

(11) **EP 0 715 708 B1**
(45) Veröffentlichungstag und Bekanntmachung des Hinweises auf die Patenterteilung: **06.05.1998**
(21) Anmeldenummer: 94926843.7
(22) Anmeldetag: 17.08.1994
(51) Int. Cl.: G01B 17/00, B21D 39/04

(54) **PRESSWERKZEUG**
PRESSING TOOL
OUTIL A PRESSER

(30) Priorität: 26.08.1993 DE 9312808 U
(43) Veröffentlichungstag der Anmeldung: 12.06.1996
(73) Patentinhaber: NOVOPRESS GMBH PRESSEN UND PRESSWERKZEUGE & CO. KG., 41460 Neuss (DE)
(72) Erfinder: LOHMANN, Gert, D-41468 Neuss (DE)
(74) Vertreter: Paul, Dieter-Alfred, Dipl.-Ing.
(86) Internationale Anmeldenummer: EP9402734
(87) Internationale Veröffentlichungsnummer: WO9506232

(56) Entgegenhaltungen:
- DE-A- 3 327 762
- US-A- 4 520 672
- PATENT ABSTRACTS OF JAPAN vol. 6, no. 245 (P-159) (1123) 3. Dezember 1982 & JP-A-57 142 507 (KUBOTA TEKKO K.K.) 3. September 1982

## Beschreibung

Die Erfindung betrifft ein Preßwerkzeug zum radialen Verpressen einer Rohrverbindung zwischen einem Rohrende und einem Preßfitting.

Zur Verbindung von Rohrenden ist es bekannt, hülsenförmige Preßfittings zu verwenden, die plastisch verformbar sind und aus Metall, vorzugsweise aus Stahl, bestehen. Solche Rohrverbindungen und die zugehörigen Preßfittings sind beispielsweise der DE-C-11 87 870̸ und der DE-C-40̸ 12 50̸4 zu entnehmen. Für die Herstellung der Verbindung werden das Rohrende und der Preßfitting axial ineinandergeschoben und anschließend mittels eines um den Preßfitting aufgesetzten Preßwerkzeugs durch zueinander bewegbare Preßbacken kraft- und formschlüssig miteinander verbunden.

Die Zuverlässigkeit der Verbindung zwischen dem jeweiligen Rohrende und dem Preßfitting hängt u. a. davon ab, daß das Rohrende um eine bestimmte Mindesteinschubtiefe in den Preßfitting eingeschoben wird. Die Einschubtiefe wird durch eine Einschnürung im Preßfitting begrenzt. Dabei ist der axiale Abstand der Einschnürung zu dem Ende, in das das Rohrende einzuschieben ist, um so größer, je größer der Durchmesser des Rohrendes bzw. des Preßfittings ist. Die Einschnürung bildet dabei einen Anschlag gegen das weitere axiale Einschieben des Rohrendes.

Das Erreichen der Mindesteinschubtiefe hängt von der Zuverlässigkeit und dem Gefühl des Monteurs ab. Insbesondere unter beengten Platzverhältnissen kann es zu einer nicht einwandfreien Einführung des Rohrendes in den Preßfitting und damit zu Verklemmungen vor Erreichen der Einschnürung kommen mit der Folge, daß die Hindesteinschubtiefe nicht erreicht und dies vom Monteur irrtümlich nicht bemerkt wird. Als zusätzliche Kontrolle ist deshalb vorgeschlagen worden, die Mindesteinschubtiefe auf dem Rohrmantel zu markieren. Hierfür sind auch besondere Markiergeräte entwickelt worden (DE-GM 92 16 760̸.8). Selbst die Verwendung solcher Markiergeräte bietet jedoch keine absolute Sicherheit gegen Fehlbedienungen. Außerdem können Markierungen verwischt werden.

In der DE-C-40̸ 12 50̸4 ist ein Verfahren beschrieben, das ein Verpressen erst dann erlaubt, wenn mit Hilfe einer am Preßwerkzeug angeordneten Vorrichtung eine Axialkraft ausgeübt wird, wobei die Verpressung erst dann auslösbar ist, wenn die Axialkraft einen bestimmten Schwellenwert überschreitet. In diesem Verfahren wird davon ausgegangen, daß das Überschreiten des Schwellenwerts erst dann eintritt, wenn das Rohrende gegen die Einschnürung anfährt. Abgesehen davon, daß bei diesem Verfahren eine entsprechend ausgebildete Vorrichtung zur Aufbringung der Axialkräfte vorgesehen sein muß, ist auch durch dieses Verfahren nicht hinreichend gesichert, daß der Schwellenwert für die Axialkraft erst dann erreicht wird, wenn tatsächlich das Rohrende gegen die Einschnürung fährt.

Aus der JP-A-57-14250̸7 ist ein Verfahren bekannt, mit dem die Position eines Gummirings ermittelt werden kann, der an der Innenseite eines Leitungshahns angeordnet ist, der über ein Rohrende gestülpt ist. Hierzu wird eine Schwingungsquelle auf der Innenseite des Rohrendes längs der Rohrachse bewegt. Im Bereich der Stirnseite des Rohrendes ist ein Schwingungssensor angeordnet, der die Veränderung des Schwingungsverhaltens in Abhängigkeit von der Bewegung der Schwingungsquelle erfaßt. Anhand dieser Veränderungen läßt sich die Lage des Gummirings zwischen Leitungshahn und Rohrende ermitteln.

Dieses Verfahren ist nicht dazu bestimmt, die Einschubtiefe des Rohrendes zu erfassen und setzt zudem voraus, daß das Meßgerät mit Schwingungsquelle und Schwingungssensor von innen eingeführt werden kann. Es eignet sich deshalb nicht für die Erfassung der Einschubtiefe bei einer Rohrverbindung der vorliegenden Art.

Der Erfindung liegt deshalb die Aufgabe zugrunde, ein Mittel zur sicheren Kontrolle der Einschubtiefe bei einer Rohrverbindung zwischen einem Rohrende und einem Preßfitting bereitzustellen.

Diese Aufgabe wird erfindungsgemäß dadurch gelöst, daß ein Meßgerät zur Erfassung der Einschubtiefe des Rohrendes in dem Preßfitting angeordnet ist, das einen an dem Preßwerkzeug angebrachten Dickensensor zur Erfassung der Materialstärke der Rohrverbindung sowie eine Auswerteeinrichtung für die zumindest qualitative Darstellung der erfaßten Materialstärke aufweist.

Dabei können für den Dickensensor insbesondere Ultraschall-, Magnetfeld- und/oder Wirbelstromsensoren in Frage kommen. Denkbar sind aber auch Dickensensoren, die aufgrund anderer physikalischer Effekte in der Lage sind, die Materialstärke der Rohrverbindung zu erfassen.

Es geht also um die Erfassung der Einschubtiefe mit Hilfe eines Meßgeräts, das die Materialstärke der Rohrverbindung zu erfassen in der Lage ist. Dabei reicht es aus, wenn dieses Meßgerät den qualitativen Unterschied zwischen der Materialstärke des Preßfittings allein und derjenigen Materialstärke ermitteln kann, die sich aus der Kombination der Materialstärke des Preßfittings und des Rohrendes ergibt. Der Unterschied wird in einer Auswerteinrichtung derart aufbereitet, daß die Bedienungsperson eine entsprechende optische oder akustische Information erhält. Sie kann sich in einer Warninformation für den Fall, daß ein Meßgerät nur die Materialstärke des Preßfittings erfaßt, erschöpfen. Es kommt jedoch auch eine quantitative Anzeige der jeweils gemessenen Materialstärke in Frage.

Im Regelfall ist ein solchermaßen ausgestattetes Preßwerkzeug nur für die Verpressung von Rohrverbindungen eines ganz bestimmten Durchmessers geeignet, so daß dann eine unbewegliche Anordnung des Dickensensors derart, daß er über der vorgesehenen Einschubtiefe zu liegen kommt, ausreichend ist. Sofern das Preßwerkzeug oder Teile davon für die Verpressung von Rohrverbindungen unterschiedlichen Durchmessers geeignet ist, empfiehlt es sich, daß zumindest eine Radialverstelleinrichtung - möglichst noch in Kombination mit einer Axialverstelleinrichtung - vorgesehen ist, um den Dickensensor hinsichtlich seiner axialen und radialen Stellung an den jeweiligen Durchmesser der Rohrverbindung derart anpassen zu können, daß die Kontrolle des Rohrendes auf Erreichen der jeweils vorgesehenen Einschubtiefe möglich ist.

In der Zeichnung ist die Erfindung anhand von Ausführungsbeispielen veranschaulicht. Es zeigen:
- Figur 1: ein Preßwerkzeug mit Dickensensor in der Frontalansicht;
- Figur 2: einen Axialschnitt durch eine Rohrverbindung mit dem Preßwerkzeug gemäß Figur 1 in der Ebene B-C;
- Figur 3: den Axialschnitt gemäß Figur 2 mit eingeschobenem Rohrende;
- Figur 4: eine Frontalansicht eines anderen Preßwerkzeugs mit Dickensensor.

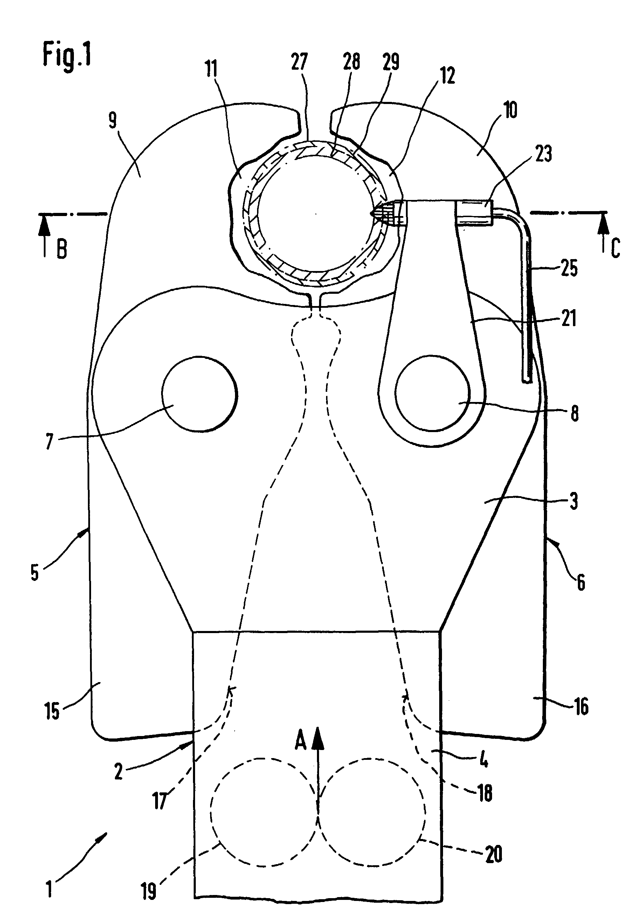

Das in Figur 1 dargestellte Preßwerkzeug 1 weist eine Grundplatte 2 auf, die aus einem in etwa herzförmigen Endstück 3 und einer sich nach unten fortsetzenden Halteplatte 4 zusammengesetzt ist. An dem Endstück 3 sind Preßhebel 5, 6 über Gelenkbolzen 7, 8 schwenkbar angelenkt.

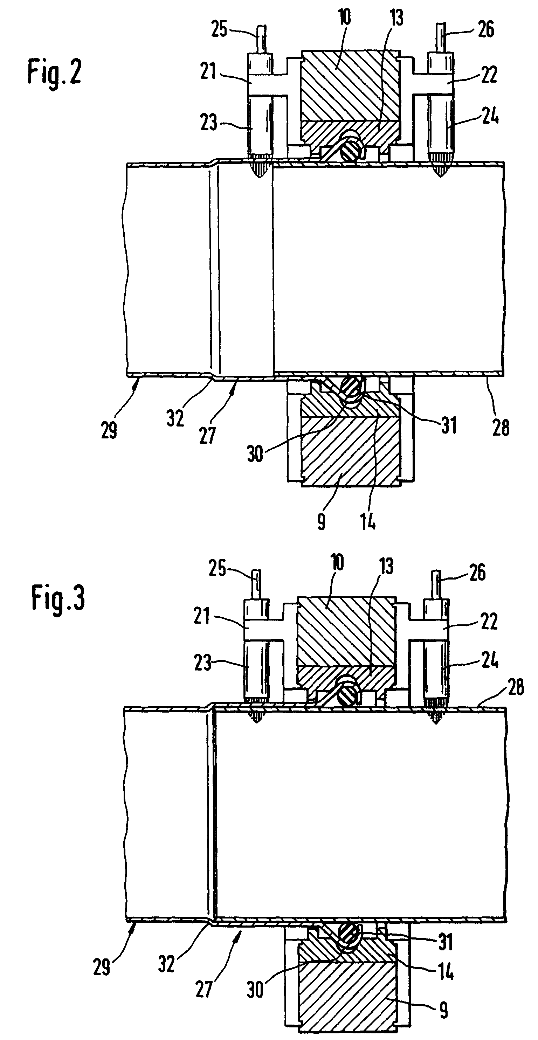

Die jeweils oberen Hebelarme 9, 10̸ der Preßhebel 5, 6 haben einander gegenüberliegende Einbuchtungen 11, 12. Wie insbesondere aus den Figuren 2 und 3 zu ersehen ist, werden die Einbuchtungen 11, 12 von Preßbacken 13, 14 begrenzt, die in die Hebelarme 9, 10̸ eingesetzt und an diesen gehaltert sind.

Die Preßhebel 5, 6 weisen untere Hebelarme 15, 16 auf, welche an den einander gegenüberliegenden Seiten Spreizflächen 17, 18 aufweisen, deren Abstand sich in Richtung auf die Gelenkbolzen 7, 8 konisch verringert. Auf der Halteplatte 4 sind zwei Spreizrollen 19, 20̸ auf einem hier nicht näher dargestellten Schlitten nebeneinander gelagert. Der Schlitten kann durch eine anmontierbare Antriebseinrichtung in Richtung des Pfeils A bewegt werden. Dabei fahren die Spreizrollen 19, 20̸ gegen die Spreizflächen 17, 18 und drücken die unteren Hebelarme 15, 16 auseinander. Dies wiederum hat zur Folge, daß die obere Hebelarme 9, 10̸ zueinander bewegt werden.

An dem Endstück 3, und zwar an dem rechtsseitigen Gelenkbolzen 8, sind beidseitig je eine Halterung 21, 22 angebracht, welche an ihren freien Enden jeweils einen sich horizontal erstreckenden Ultraschallsensor 23, 24 üblicher Bauart halten. Aus den hinteren Enden der Ultraschallsensoren 23, 24 ragen Elektrokabel 25, 26 heraus, die zu einem hier nicht näher dargestellten Auswertgerät mit einer digitalen Anzeige gehen. Auch hierbei handelt es sich um übliche, auf dem Markt befindliche Auswertgeräte.

Wie sich insbesondere aus den Figuren 2 und 3 ersehen läßt, umfassen die Preßbacken 13, 14 eine Rohrverbindung 27. Sie besteht aus einem Rohrende 28 und einem Preßfitting 29, beide üblicher Bauart. Der Preßfitting 29 ist nur teilweise dargestellt und hat an seinem dem Rohrende 28 zugewandten Ende einen über den Umfang gehenden Ringwulst 30̸, in den innenseitig ein Dichtungsring 31 aus elastomerem Material eingelegt ist. Im Abstand zu dem Ringwulst 30̸ hat der Preßfitting 29 eine Einschnürung 32, welche einen Anschlag für das Rohrende 28 bildet.

In Figur 2 ist das Rohrende 28 nicht bis zu der Einschnürung 32 eingeschoben, sondern endet vor dem Ultraschallsensor 23. Dieser erfaßt somit nur die Materialstärke, d. h. die Wanddicke des Preßfittings 29. Dies wird in der Auswerteinrichtung entsprechend angezeigt, beispielsweise durch eine Digitalanzeige oder durch eine Warnanzeige akustischer oder optischer Art. Dabei kann die Auswerteinrichtung mit der Antriebseinrichtung für das Preßwerkzeug 1 in der Weise gekoppelt sein, daß die Antriebseinrichtung solange nicht betätigt werden kann, solange der Ultraschallsensor nur die Wanddicke des Preßfittings 29 erfaßt. Auf diese Weise wird automatisch eine Fehlbedienung des Preßwerkzeugs 1 vermieden.

In Figur 3 ist das Rohrende 28 um die vorgesehene Einschubtiefe bis zu der Einschnürung 32 eingeschoben. Der Ultraschallsensor 23 erfaßt nunmehr die Wanddicken sowohl des Preßfittings 29 als auch des Rohrendes 28, also die doppelte Materialstärke. Die Auswerteinrichtung zeigt dies entsprechend an und gibt die Antriebseinrichtung für das Preßwerkzeug frei, sofern eine direkte Verbindung zwischen beiden besteht.

Es kann nun der eigentliche Preßvorgang durch Betätigung der Antriebseinrichtung beginnen. Wie schon oben beschrieben, fahren dann die beiden Spreizrollen 19, 20̸ zwischen die unteren Hebelarme 15, 16 ein und verschwenken hierdurch die oberen Hebelarme 9, 10̸ gegeneinander, wodurch der Preßfitting 29 und das Rohrende 28 radial gestaucht werden. Dabei wird auch der Ringwulst 30̸ so gegen das Rohrende 28 gedrückt, daß der Dichtungsring 31 mit der für eine gute Abdichtung nötigen Radialkraft auf das Rohrende 28 gepreßt wird.

Wie aus den Figuren 2 und 3 zu ersehen, sind die Preßbacken 13, 14 symmetrisch gestaltet. Dies bedeutet, daß das Preßwerkzeug 1 auch seitenverkehrt aufgesetzt und betätigt werden kann. Um auch für diesen Fall eine Kontrolle der Einschubtiefe des Rohrendes 28 durchführen zu können, ist der zweite Ultraschallsensor 24 auf der anderen Seite des Preßwerkzeugs 1 angebracht. Der Ultraschallsensor 24 ist nicht notwendig, wenn die Preßbacken 13, 14 eine asymmetrische Formgebung haben, die ein Ansetzen des Preßwerkzeugs nur in einer Stellung erlauben, oder wenn andere Vorrichtung, beispielsweise die Lehre nach dem DE-GM 92 16 369.6, ein Ansetzen in falscher Stellung verhindern.

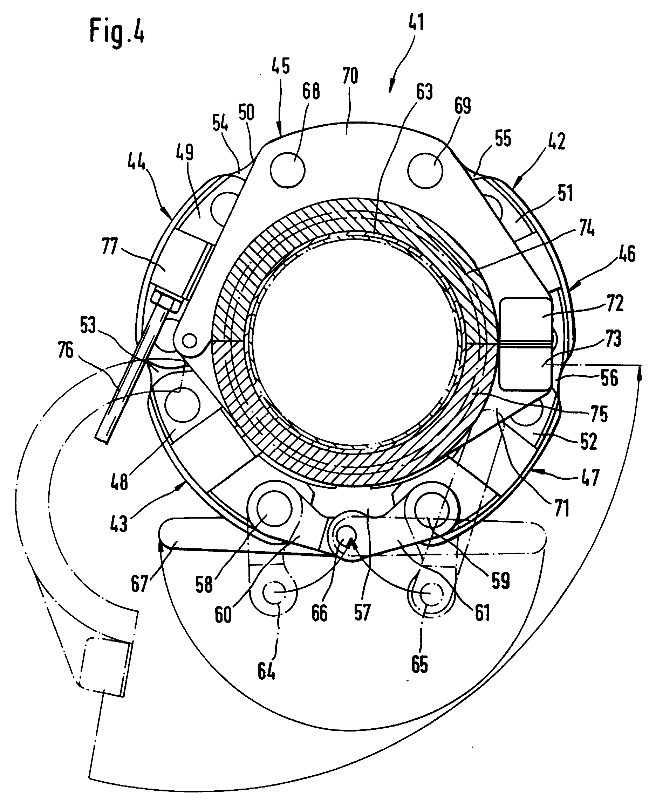

In Figur 4 ist ein Preßwerkzeug 41 vorgesehen, wie es sich im einzelnen beispielsweise aus dem DE-GM 92 16 369.6 ergibt. Das Preßwerkzeug 41 hat einen Preßring 42 mit fünf im wesentlichen identisch ausgebildeten Preßbackenelementen 43, 44, 45, 46, 47. Dabei besteht jedes Preßbackenelement aus einem außenliegenden Preßbackenträger 48, 49, 50̸, 51, 52 und einer innenliegenden, bogenförmigen Preßbacke. Bis auf eine Ausnahme sind die Preßbackenträger 48, 49, 50̸, 51, 52 über Zwischenstücke 53, 54, 55, 56 miteinander gelenkig verbunden.

Die in dieser Ansicht unteren Preßbackenelemente 43, 47 haben zwischen sich einen Schließspalt 57. Die freien Enden dieser Preßbackenelemente 43, 47 tragen Gelenkbolzen 58, 59, an denen jeweils eine Kupplungslasche 60̸, 61 aufgehängt ist. Wenn sich die Kupplungslaschen 60̸, 61 in der strichpunktiert dargestellten Stellung befinden, also nicht miteinander gekuppelt sind, kann der Preßring 42 über eine Rohrverbindung 63, bestehend aus einem Preßfitting und einem Rohrende, gelegt werden. Dies ist in der gezeigten Darstellung geschehen. Dann werden die beiden unteren Preßbackenelemente 43, 47 in Richtung zueinander verschwenkt und die Kupplungslaschen 60̸, 61 ebenfalls gegeneinander bewegt, bis ihre an den freien Enden vorhandenen Kupplungslöcher 64, 65 miteinander fluchten. Durch beide Kupplungslöcher 64, 65 wird dann ein Kupplungsbolzen 66 gestoßen, der mit einem Betätigungshebel 67 verbunden ist. Durch Umlegen des Betätigungshebels 67 um 180̸° kann die Verbindung zwischen den beiden Kupplungslaschen 60̸, 61 etwas verkürzt und damit der Preßring 42 insgesamt so gespannt werden, daß er einen festen Sitz auf der Rohrverbindung 63 hat. Hierzu ist der Kupplungsbolzen 66 als Exzenterbolzen ausgebildet, wie sich dies im einzelnen aus dem DE-GM 92 16 369.6 ergibt. Da dies für die Funktion der vorliegenden Erfindung nicht wesentlich ist, wird hierauf Bezug genommen.

An den Gelenkbolzen 68, 69 des oberen Preßbackenelements 45 ist eine U-Lasche 70 befestigt. An deren linksseitigem Ende in der axialen Mittelebene des Preßwerkzeugs 41 ist ein U-Bügel 71 angelenkt. Der U-Bügel 71 ist aus der strichpunktiert gezeichneten Stellung in die durchgezogen gezeichnete Stellung verschwenkt und über Kupplungselemente 72, 73 mit der U-Lasche 70̸ verbunden. Dabei bilden die Innenkante von U-Lasche 70̸ und U-Bügel 71 einen geschlossenen, zur Rohrverbindung 63 konzentrischen Kreis.

In die U-Lasche 70̸ einerseits und den U-Bügel 71 andererseits sind halbkreisförmige Induktionsspulen 74, 75 eingesetzt, die sich in der gezeigten geschlossenen Stellung zu einer zylinderförmigen Induktionsspule ergänzen. Die Induktionsspulen 74, 75 können über ein Kabel 76 und eine Eingangsstelle 77 mit Wechselstrom versorgt werden. Dies hat zur Folge, daß ein Wirbelstromfeld entsteht, dessen Induktivität von der Materialstärke der Rohrverbindung 63 im Bereich der Induktionsspulen 74, 75 abhängt.

Die Induktionsspulen 74, 75 haben einen solchen Axialabstand zu dem Preßring 42, daß sie bei ordnungsgemäßer Anbringung des Preßrings 42 um den hier nicht sichtbaren Ringwulst der Rohrverbindung 63 bzw. des Preßfittings sich in einer Position befinden, die vergleichbar ist mit der Position des Ultraschallsensors 23 bei dem Ausführungsbeispiel gemäß den Figuren 1 bis 3, also unmittelbar benachbart der Einschnürung des Preßfittings.

Dabei ist die Induktivität dann, wenn sich in diesem Bereich nur der Preßfitting befindet, das zugehörige Rohrende also noch nicht ausreichend tief in den Preßfitting eingeschoben ist, unterschiedlich zu der Induktivität, die sich bei vollständig eingeschobenem Rohrende einstellt. Dies kann durch hier nicht näher dargestellte Mittel erfaßt und an die ebenfalls nicht dargestellte Auswerteinrichtung zur Darstellung der beiden Zustände weitergegeben werden.

## Patentansprüche

1. Preßwerkzeug (1, 41) zum radialen Verpressen einer Rohrverbindung (27, 63) zwischen einem Rohrende (28) und einem Preßfitting (29),
dadurch gekennzeichnet, daß ein Meßgerät zur Erfassung der Einschubtiefe des Rohrendes (28) in dem Preßfitting (29) angeordnet ist, das einen an dem Preßwerkzeug (1, 41) angebrachten Dickensensor (23, 24, 74, 75) zur Erfassung der Materialstärke der Rohrverbindung (27, 63) sowie eine Auswerteeinrichtung für die zumindest qualitative Darstellung der erfaßten Materialstärke aufweist.

2. Preßwerkzeug nach Anspruch 1,
dadurch gekennzeichnet, daß der Dickensensor (23, 24, 74, 75) als Ultraschall-, Magnetfeld- und/oder Wirbelstromsensor ausgebildet ist.

3. Preßwerkzeug nach Anspruch 1 oder 2,
dadurch gekennzeichnet, daß der Geräteträger (1, 42) ein vom Durchmesser der zu verpressenden Rohrverbindung (27, 63) abhängiger Teil des Preßwerkzeugs (1, 41) ist.

4. Preßwerkzeug nach Anspruch 1 oder 2,
dadurch gekennzeichnet, daß der Geräteträger ein vom Durchmesser der zu verpressenden Rohrverbindung unabhängiger Teil des Preßwerkzeugs ist.

## Claims

1. Pressing tool (1, 41) for radially compressing a pipe connection (27, 63) between a pipe extremity (28) and a press fitting (29),
characterised in that a measuring instrument for detecting the depth to which the pipe extremity (28) is inserted is arranged in the press fitting (29), which incorporates a thickness sensor (23, 24, 74, 75) mounted on the pressing tool (1, 41) for detecting the thickness of the pipe connection (27, 63) and an evaluating device for representing the detected thickness of material at least qualitatively.

2. Pressing tool according to claim 1,
characterised in that the thickness sensor (23, 24, 74, 75) is an ultrasound, magnetic field and/or eddy current sensor.

3. Pressing tool according to claim 1 or 2,
characterised in that the tool carrier (1, 42) is a part of the pressing tool (1, 41) dependent on the diameter of the pipe connection (27, 63) to be compressed.

4. Pressing tool according to claim 1 or 2,
characterised in that the tool carrier is a part of the pressing tool independent of the diameter of the pipe connection to be compressed.

## Revendications

1. Outil de pressage (1, 41) pour la compression radiale d'un assemblage ou raccordement de tubes (27, 63) entre une extrémité de tube (28) et un raccord à presser (29),
**caractérisé** en ce qu'on dispose un appareil de mesure pour détecter la profondeur d'emboîtement de l'extrémité de tube (28) dans le raccord à presser (29), appareil qui présente un capteur d'épaisseur (23, 24, 74, 75) installé sur l'outil de pressage (1, 41) pour détecter l'épaisseur de matériau de l'assemblage de tubes (27, 63), ainsi qu'une unité d'interprétation pour la représentation au moins qualitative de l'épaisseur de matériau détectée.

2. Outil de pressage selon la revendication 1, **caractérisé** en ce que le capteur d'épaisseur (23, 24, 74, 75) est réalisé sous forme de capteur à ultrasons, à champ magnétique et/ou à courant de Foucault.

3. Outil de pressage selon la revendication 1 ou 2, **caractérisé** en ce que le support d'appareil (1, 42) est un élément de l'outil de pressage (1, 41) dépendant du diamètre de l'assemblage de tubes (27, 63) à comprimer.

4. Outil de pressage selon la revendication 1 ou 2, **caractérisé** en ce que le support d'appareil est un élément de l'outil de pressage indépendant du diamètre de l'assemblage de tubes à comprimer.
